# EUROPÄISCHE PATENTSCHRIFT

(11) **EP 1 725 796 B1**
(45) Veröffentlichungstag und Bekanntmachung des Hinweises auf die Patenterteilung: **11.06.2008**
(21) Anmeldenummer: 05715253.0
(22) Anmeldetag: 04.02.2005
(51) Int. Cl.: F16K 17/06

(54) **RÜCKSCHLAGVENTIL**
NON-RETURN VALVE
SOUPAPE DE RETENUE

(30) Priorität: 17.03.2004 DE 102004014377
(43) Veröffentlichungstag der Anmeldung: 29.11.2006
(73) Patentinhaber: HYDAC FILTERTECHNIK GMBH, 66280 Sulzbach (DE)
(72) Erfinder: KLEIN, Volkmar, 66482 Zweibrücken (DE)
(74) Vertreter: Bartels, Martin Erich Arthur
(86) Internationale Anmeldenummer: PCT/EP2005/001124
(87) Internationale Veröffentlichungsnummer: WO 2005/098284

(56) Entgegenhaltungen:
- EP-A- 0 819 875
- GB-A- 1 011 376
- US-A- 1 150 641
- US-A- 2 884 952
- US-A- 3 255 774
- US-A- 3 756 273
- PATENT ABSTRACTS OF JAPAN vol. 018, no. 297 (M-1617), 7 June 1994 (1994-06-07) & JP 06 058431 A (SEIJI YAMANE), 1 March 1994 (1994-03-01)

## Beschreibung

Die Erfindung bezieht sich auf ein Rückschlagventil mit einem Ventilgehäuse, das einen inneren, sich entlang von dessen Längsachse erstreckenden Fluiddurchlaß definiert, mit einem im Durchlaß befindlichen, einen Ventilsitz definierenden Sitzkörper und mit einem Sperrkörper, der für die Bewegung zwischen einer am Sitzkörper anliegenden Sperrstellung und vom Ventilsitz am Sperrkörper abgehobenen Öffnungsstellungen gegen die Schließkraft einer Schließfeder im Durchlaß axial bewegbar ist.

In fluidtechnischen Anlagen sind vielfach Rückschlagventile als Bestandteil des Steuersystems der Anlagen enthalten. Bei vielen Einsatzfällen hat sich in der Praxis gezeigt, dass aufgrund unterschiedlicher Gestaltung der Anlagen (hinsichtlich Druckniveau, Volumenstrom, Einbauort und dergleichen) die Steuerung bei Verwendung von Rückschlagventilen mit werkseitig fest eingestelltem Öffnungsdruck nicht störungsfrei erfolgt. In einem solchen Fall muß bei Inbetriebnahme einer Anlage vor Ort jeweils ein betreffendes Rückschlagventil gegen ein Ventil mit einem auf die Anlage abgestimmten Öffnungsdruck ausgetauscht werden. Dies erfordert lästige und zeitaufwendige Umbaumaßnahmen, die gegebenenfalls wiederholt durchgeführt werden müssen, weil der von Fall zu Fall benötigte Öffnungsdruck nicht genau vorhersehbar ist. Abhilfe wäre hier mit einem hinsichtlich des Öffnungsdruckes einstellbaren Rückschlagventil möglich.

Dokument US 2,884,952 offenbart ein einstellbares Rückschlagventil nach dem Oberbegriff des Anspruches 1.

Derzeit erhältliche einstellbare Rückschlagventile werden jedoch den zu stellenden Anforderungen nicht gerecht. Bekannte Ventile mit einstellbarem Öffnungsdruck sind als Druckbegrenzungsventile ausgeführt. Abgesehen davon, dass Druckbegrenzungsventile hinsichtlich ihrer Verstellbereiche, der Druckstufen und des Temperaturbereiches wenig geeignet sind, tritt bei Druckbegrenzungsventilen das Hauptproblem auf, dass der Fluidstrom nach der Einstellvorrichtung um 90° umgelenkt wird, so dass sich bei schmutzbefrachteten Fluiden Schmutzpartikel am Ventilsitz ablagern können, die dann das Ventil versagen lassen.

Der Erfindung liegt die Aufgabe zugrunde, ein einstellbares Rückschlagventil zu schaffen, das wie die bekannten Rückschlagventile ohne Umlenkung des Fluidstromes arbeitetet (Ein-/Austritt und Wirkrichtung des Ventils in einer Längsachse) und bei dem der Öffnungsdruck ohne Veränderung der Baulänge des Ventils einstellbar ist.

Bei einem Rückschlagventil der eingangs genannten Art ist diese Aufgabe erfindungsgemäß dadurch gelöst, dass das Ventilgehäuse eine Führung bildet, längs deren der Sitzkörper in unterschiedliche Einstellpositionen axial verschiebbar ist, die gewünschten Vorspannungen der Schließfeder und damit gewünschten Einstellungen der Größe der Schließkraft der Schließfeder entsprechen.

Dadurch steht ein Rückschlagventil mit axialem Fluiddurchtritt zur Verfügung, das bei Inbetriebnahme einer zugeordneten fluidtechnischen Anlage die Einstellung des für die Funktion der Anlage jeweils optimalen Öffnungsdruckes ermöglicht, so dass keine Auswechslung des Ventils zur Anpassung erforderlich ist. Durch entsprechende Auslegung der Schließfeder läßt sich das Rückschlagventil für gewünschte Druck-Einstellbereiche auslegen. Für den Einbau in eine betreffende Anlage läßt sich daher ein Rückschlagventil auswählen, dessen Einstellbereich den zu erwartenden Bereich des benötigten Öffnungsdruckes überspannt.

Bei besonders vorteilhaften Ausführungsbeispielen der Erfindung ist eine von der Außenseite des Ventilgehäuses betätigbare Verschiebeeinrichtung zum Steuern der axialen Einstellpositionen des Sitzkörpers vorgesehen. Ohne dass Montageeingriffe erforderlich wären, läßt sie somit der Öffnungsdruck des Ventils in eingebautem Zustand unter den jeweils herrschenden Betriebsbedingungen einstellen.

Bei Ausführungsbeispielen, die sich durch eine besonders einfache und kompakte Bauweise auszeichnen, bildet die den Durchlaß begrenzende Innenwand des Ventilgehäuses die Führung für den verschiebbaren Sitzkörper, der durch einen Einstellkolben gebildet ist, der einen koaxialen inneren Durchgang aufweist, dessen dem Sperrkörper zugewandter Rand den Ventilsitz für den einen Ventilkörper aufweisenden Sperrkörper bildet.

Bei derartigen Ausführungsbeispielen kann die von der Außenseite des Ventilgehäuses betätigbare Verschiebeeinrichtung, mittels deren die Einstellung des Öffnungsdruckes vorgenommen werden kann, in der Weise ausgebildet sein, dass die die Führung des Einstellkolbens bildende Wand des Ventilgehäuses zumindest eine sich in Axialrichtung erstreckende Schlitzöffnung aufweist, die von einem Steuerstift durchgriffen ist, der Teil der Verschiebeeinrichtung ist, mit seinem inneren Ende in einer radialen Bohrung des Einstellkolbens sitzt und mit seinem äußeren Abschnitt an der Außenseite des Ventilgehäuses vorsteht. Die Anordnung kann hierbei so getroffen sein, dass der vorstehende äußere Abschnitt des Steuerstiftes mit einer Stellmechanik zusammenwirkt, die je nach den Erfordernissen und Einsatzgebieten gestaltet sein kann. Neben steuerbaren Linearantrieben kann eine manuell betätigbare Stelleinrichtung vorgesehen sein, beispielsweise eine auf dem Ventilgehäuse sitzende Stellmutter.

Bei derartiger Gestaltung der Stelleinrichtung sind vorzugsweise im Ventilgehäuse zwei einander diametral gegenüberliegende Schlitzöffnungen für zwei diametral gegenüberliegende Steuerstifte der Verschiebeeinrichtung vorgesehen. Über die Stellmutter wird in diesem Fall die Verschiebekraft für Einstellvorgänge an zwei einander diametral gegenüberliegenden Stellen in den als Sitzkörper dienenden, verschiebbaren Einstellkolben eingeleitet, so dass die Einstellvorgänge feinfühlig und ohne Gefahr eines Verkantens durchgeführt werden können.

Vorzugsweise weist die Verschiebeeinrichtung hierbei zwei Stellmuttern auf, zwischen denen der nach außen vorstehende Abschnitt der Steuerstifte aufgenommen ist. Die Steuerstifte und der Einstellkolben sind hierbei nicht nur in beiden Verstellrichtungen einstellbar, sondern die Einstellung ist auch durch Kontern der Stellmuttern auf einfache und sichere Weise festlegbar.

Bei vorteilhaften Ausführungsbeispielen ist der federbelastete Sperrkörper, dessen Ventilkörper mit dem Ventilsitz am Einstellkolben zusammenwirkt, an einem im Durchlaß des Ventilgehäuses befindlichen Führungskörper axial verschiebbar geführt. Der durch diese Führung zur Verfügung gestellte Verschiebeweg für den Sperrkörper ist so lang bemessen, dass bei allen in Frage kommenden Einstellpositionen des Einstellkolbens ein ausreichender Verschiebeweg als Öffnungshub des Sperrkörpers zur Verfügung steht.

Vorzugsweise ist die von der Außenseite des Ventilgehäuses betätigbare Verschiebeeinrichtung, die die axialen Einstellpositionen des als Sitzkörper dienenden Einstellkolbens steuert, mit einer Anzeigeeinrichtung versehen, die eine Positionsanzeige und damit eine Kennzeichnung für den eingestellten Öffnungsdruck liefert. Bei Ausführungsbeispielen, bei denen die Verschiebeeinrichtung Stellmuttern auf dem Ventilgehäuse aufweist, kann eine visuell ablesbare Markierung oder Skala längs der Außenseite des Ventilgehäuses vorgesehen sein, an der die Lage der Stellmuttern ablesbar ist.

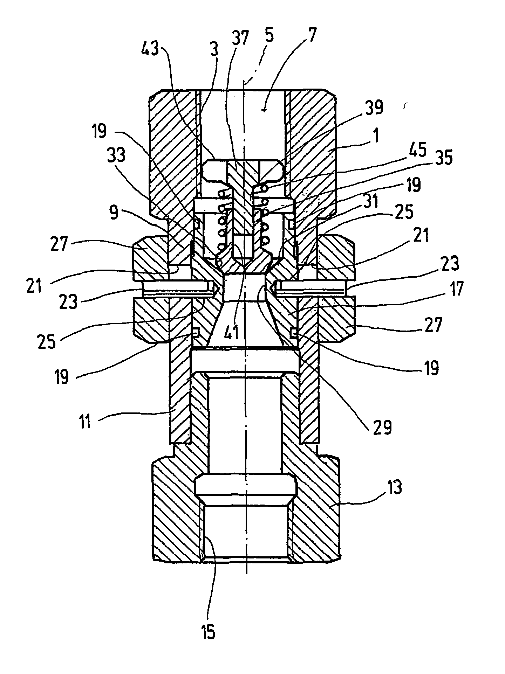

Nachstehend ist die Erfindung anhand eines in der Zeichnung dargestellten Ausführungsbeispieles des erfindungsgemäßen Rückschlagventiles im einzelnen erläutert.
- Die einzige Fig. zeigt einen in annähernd natürlichem Maßstab gezeichneten Längsschnitt des Ausführungsbeispieles des erfindungsgemäßen Rückschlagventils.

Ein aus Sechskantstahl gefertigtes Ventilgehäuse 1 weist am einen Ende ein Einschraub-Innengewinde 3 auf, das einen Endabschnitt eines zur Längsachse 5 konzentrischen Fluiddurchlasses 7 definiert. An den das Innengewinde 3 enthaltenden Sechskantabschnitt des Ventilgehäuses 1 schließt sich ein sowohl an Außenseite als auch an Innenseite kreiszylinderförmiger Abschnitt 9 an, in dessen Endabschnitt 11 ein Anschlußadapter 13 eingepreßt ist, der einen zweiten Fluidanschluß bildet, wobei ein Einschraub-Innengewinde 15 vorgesehen ist, das dem Einschraub-Innengewinde 3 am entgegengesetzten Ende des Gehäuses 1 entspricht.

In dem kreiszylinderförmigen Gehäuseabschnitt 9 zwischen dem Adapter 13 und dem Innengewinde 3 ist ein den Sitzkörper des Rückschlagventiles bildender Einstellkolben 17 axial verschiebbar geführt. Mittels in Ringnuten 19 sitzenden O-Ringen (nicht dargestellt) ist der Einstellkolben 17 an seinen beiden axialen Endbereichen gegenüber der Zylinderwand des Ventilgehäuses 1 abgedichtet, so dass der Fluiddurchlaß 7 auch gegenüber Schlitzöffnungen 21 abgedichtet ist, die sich durch die Wand des Ventilgehäuses 1 erstrecken. Die sich in Axialrichtung erstreckenden Schlitzöffnungen 21 stellen einen axialen Verschiebeweg für Steuerstifte 23 zur Verfügung, die, einander diametral gegenüberliegend, sich durch die Schlitzöffnungen 21 erstrecken, in radialen Sackbohrungen 25 des Einstellkolbens 17 sitzen und mit ihrem äußeren Ende über die Außenwand des Ventilgehäuses 1 hinaus vorstehen. Die nach außen vorstehenden Abschnitte der Steuerstifte 23 befinden sich zwischen zwei Stellmuttern 27, die auf ein auf dem Gehäuseabschnitt 9 befindliches Außengewinde aufgeschraubt sind.

Der Einstellkolben 17 ist an seiner Außenseite leicht gestuft und geometrisch so gestaltet, dass bei seinem Einbau in das Ventilgehäuse 1 die in den Ringnuten 19 sitzenden O-Ringe nicht beschädigt werden.

Der Einstellkolben 17 weist einen koaxialen inneren Durchgang 29 auf, dessen Öffnungsrand, der dem Einschraub-Innengewinde 3 zugewandt ist, einen Ventilsitz 31 in Form einer Kegelfläche bildet, der mit einem entsprechenden Ventilkegel 33 an einem Sperrkörper 35 zusammenwirkt.

Der Sperrkörper 35 ist an einem Führungskörper 37 axial verschiebbar geführt, der einen zur Längsachse 5 konzentrischen Führungszapfen 39 aufweist, der in eine konzentrische Sackbohrung 41 des Sperrkörpers 35 eingreift. An dem vom Führungszapfen 39 abgekehrten Ende weist der Führungskörper 37 radial verlaufende Arme 43 auf, deren radial äußerer Rand mit einem Außengewinde versehen ist, mittels dem der Führungskörper 37 am Innengewinde 3 des Ventilgehäuses 1 verankert ist. Zwischen den Armen 43 des Führungskörpers 37 und der den Ventilkegel 33 bildenden Verdickung des Sperrkörpers 35 ist eine Schrauben-Druckfeder 45 eingespannt, die die Schließkraft erzeugt, unter der der Ventilkegel 33 des Sperrkörpers 35 an den Ventilsitz 31 am Einstellkolben 17 angedrückt wird.

Die Fig. zeigt die Einstellposition des als Sitzkörper dienenden Einstellkolbens 17 in der dem niedrigsten Öffnungsdruck entsprechenden Position. Wenn durch Drehen der Stellmuttern 27 über die Steuerstifte 23 eine Axialverschiebung des Einstellkolbens 17 nach oben (entsprechend der Fig.) bewirkt wird, wird der Sperrkörper 35 gegen die Schließkraft der Druckfeder 45 mit bewegt, so dass sich die Federspannung und damit die Schließkraft erhöhen. Der Einstellweg des Einstellkolbens 17 ist durch die axiale Länge der Schlitzöffnungen 21 definiert und damit der größte einstellbare Öffnungsdruck. Es ist wesentlich, dass die Länge der Sackbohrung 41, in die der Führungszapfen 39 des Führungskörpers 37 eingreift, eine ausreichende Führungslänge zur Verfügung stellt, so dass auch bei der Endstellung des Verschiebeweges des Einstellkolbens 17 noch ein ausreichender Verschiebeweg des Sperrkörpers 35 als Öffnungshub zur Verfügung steht.

Das erfindungsgemäße Rückschlagventil bietet einen axialen Fluiddurchgang, so dass, da keine Stromumlenkung erforderlich ist, keine Störungen durch Ablagerung von Partikeln befürchtet werden muß, wenn es sich um schmutzbefrachtete Fluide handelt. Die Bauelemente des Rückschlagventils können aus rostfreien Stählen hergestellt werden, so dass sich das Ventil auch für aggressive Medien eignet. An der Außenseite des Ventilgehäuses 1 kann eine Positionsmarkierung oder Skala angebracht sein, um eine Anzeige für die Stellung des Einstellkolbens 17 zu liefern. Bei geeichten Markierungen oder Skalen kann eine Voreinstellung des Ventils auf gewünschte Öffnungsdruckwerte erfolgen.

## Patentansprüche

1. Rückschlagventil mit einem Ventilgehäuse (1), das einen inneren, sich entlang von dessen Längsachse (5) erstreckenden Fluiddurchlaß (7) definiert, mit einem im Durchlaß (7) befindlichen, einen Ventilsitz (31) definierenden Sitzkörper und mit einem Sperrkörper (35), der für die Bewegung zwischen einer am Sitzkörper anliegenden Sperrstellung und vom Ventilsitz (31) am Sitzkörper abgehobenen Öffnungsstellungen gegen die Schließkraft einer Schließfeder (45) im Durchlaß (7) axial bewegbar ist, **dadurch gekennzeichnet, dass** das Ventilgehäuse (1) eine Führung bildet, längs deren der Sitzkörper in unterschiedliche Einstellpositionen axial verschiebbar und ohne Veränderung der Baulänge des Ventils einstellbare ist, wobei die Einstellpositionen die gewünschten Vorspannungen der Schließfeder (45) und damit gewünschten Einstellungen der Größe der Schließkraft der Schließfeder (45) entsprechen.

2. Rückschlagventil nach Anspruch 1, **dadurch gekennzeichnet, dass** eine von der Außenseite des Ventilgehäuses (1) betätigbare Verschiebeeinrichtung (23, 27) zum Steuern der axialen Einstellpositionen des Sitzkörpers vorgesehen ist.

3. Rückschlagventil nach Anspruch 1 oder 2, **dadurch gekennzeichnet, dass** die den Durchlaß (7) begrenzende Innenwand des Ventilgehäuses (1) die Führung für den verschiebbaren Sitzkörper bildet, der durch einen Einstellkolben (17) gebildet ist, der einen koaxialen inneren Durchgang (29) aufweist, dessen dem Sperrkörper (35) zugewandter Rand den Ventilsitz (31) für den einen Ventilkegel (33) aufweisenden Sperrkörper (35) bildet.

4. Rückschlagventil nach den Ansprüchen 2 und 3, **dadurch gekennzeichnet, dass** die die Führung des Einstellkolbens (17) bildende Wand des Ventilgehäuses (1) zumindest eine sich in Axialrichtung erstreckende Schlitzöffnung (21) aufweist, die von einem Steuerstift (23) durchgriffen ist, der Teil der Verschiebeeinrichtung ist, mit seinem inneren Ende in einer radialen Bohrung des Einstellkolbens (17) sitzt und mit seinem äußeren Abschnitt an der Außenseite des Ventilgehäuses (1) vorsteht.

5. Rückschlagventil nach Anspruch 4, **dadurch gekennzeichnet, dass** das Ventilgehäuse (1) in dem die Schlitzöffnung (21) aufweisenden Bereich ein Außengewinde für zumindest eine zur Verschiebeeinrichtung gehörende Stellmutter (27) aufweist, die zur Einstellung der Axialposition des Einstellkolbens (17) mit dem aus dem Ventilgehäuse (1) vorstehenden Abschnitt des Steuerstiftes (23) zusammenwirkt.

6. Rückschlagventil nach Anspruch 5, **dadurch gekennzeichnet, dass** im Ventilgehäuse (1) zwei einander diametral gegenüberliegende Schlitzöffnungen (21) für zwei diametral gegenüberliegende Steuerstifte (23) der Verschiebeeinrichtung vorgesehen sind.

7. Rückschlagventil nach Anspruch 6, **dadurch gekennzeichnet, dass** die Verschiebeeinrichtung zwei Stellmuttern (27) aufweist, zwischen denen der nach außen vorstehende Abschnitt der Steuerstifte (23) aufgenommen ist.

8. Rückschlagventil nach einem der Ansprüche 1 bis 7, **dadurch gekennzeichnet, dass** im Durchlaß (7) des Ventilgehäuses (1) ein Fluiddurchlässe aufweisender Führungskörper (37) vorgesehen ist, an dem der Sperrkörper (35) axial verschiebbar geführt ist.

9. Rückschlagventil nach Anspruch 8, **dadurch gekennzeichnet, dass** der Führungskörper (37) einen sich konzentrisch zur Längsachse (5) erstrekkenden Führungszapfen (39) aufweist, der für die Führung des Sperrkörpers (35) in eine konzentrische Sackbohrung (41) des Sperrkörpers (35) eingreift, die an dessen vom Ventilkegel (33) abgekehrten Ende offen ist, und dass die Sackbohrung (41) eine die Verschiebebewegung des Sperrkörpers (35) in entsprechende Öffnungsstellungen relativ zum Führungszapfen (39) des Führungskörpers (37) ermöglichende axiale Länge besitzt.

10. Rückschlagventil nach Anspruch 7 oder 8, **dadurch gekennzeichnet, dass** als Schließfeder eine Schrauben - Druckfeder (45) vorgesehen ist, die zwischen dem Führungskörper (37) und dem Sperrkörper (35) eingespannt ist.

11. Rückschlagventil nach Anspruch 10, **dadurch gekennzeichnet, dass** der Führungskörper (37) an dem dem Führungszapfen (39) entgegengesetzten Ende radial verlaufende Arme (43), die zur Verankerung am Ventilgehäuse (1) vorgesehen sind, aufweist, an denen das zugekehrte Ende der Schraubenfeder (45) abgestützt ist.

## Claims

1. Non-return valve with a valve housing (1) defining an inner fluid passage (7) extending along the longitudinal axis (5) of the same, with a seat body defining a valve seat (31) located in the passage (7), and with a blocking body (35), the same being moveable against the closing force of a closing spring (45) which is axially moveable within the passage (7) for a displacement between a blocked position abutting against the seat body and an open position lifted from the valve seat (31) of the seat body, **characterised in that** the valve housing (1) forms a guide, along which the seat body is axially displaceable into different adjustment positions and can be adjusted without changing the construction length of the valve, whereby the adjustment positions equal the desired pre-tensions of the closing spring (45), and therefore the desired adjustments of the extent of the closing force of the closing spring (45).

2. Non-return valve according to Claim 1 **characterised in that** a displacement means (23, 27) to be activated from the outside of the valve housing (1) is envisaged for controlling the axial adjustment position of the seat body.

3. Non-return valve according to Claim 1 or 2, **characterised in that** the inner wall of the valve housing (1) delimiting the passage (7) forms the guide for the displaceable seat body, which is formed by an adjustment piston (17) comprising a coaxial inner passage (29), the edge of which facing the blocking body (35) forms the valve seat (31) for the blocking body (35) comprising a valve cone (33).

4. Non-return valve according to Claims 2 and 3, **characterised in that** the wall of the valve housing (1) forming the guide for the adjustment piston (17) comprises at least one slot opening (21) extending in an axial direction, which is penetrated by a control pin (23) forming a part of the displacement means and sitting in a radial bore of the adjustment piston (17) with its inner end and projecting on the outside of the valve housing (1) with its outer section.

5. Non-return valve according to Claim 4, **characterised in that** the valve housing (1) comprises an external thread for at least one adjusting nut (27) associated with the displacement means in the area with the slot opening (21), the same co-operating with the section of the control pin (23) projecting from the valve housing (1) for adjusting the axial position of the adjustment piston (17).

6. Non-return valve according to Claim 5, **characterised in that** two diametrically opposing slot openings (21) for two diametrically opposing control pins (23) of the displacement means are envisaged in the valve housing (1).

7. Non-return valve according to Claim 6, **characterised in that** the displacement means comprises two adjusting nuts (27), between which the section of the control pins (23) that projects on the outside is received.

8. Non-return valve according to one of the Claims 1 to 7, **characterised in that** a guide body (37) comprising a fluid passage is envisaged in the passage (7) of the valve housing (1), along which the blocking body (35) is held and can be axially displaced.

9. Non-return valve according to Claim 8, **characterised in that** the guide body (37) comprises a guide spigot (39) extending concentrically in relation to the longitudinal axis (5), which engages a concentrical dead-end bore (41) of the blocking body (35) for guiding the said blocking body (35), which is open at the end facing away from the valve cone (33), and **in that** the dead-end bore (41) comprises an axial length enabling the displacement movement of the blocking body (35) into the corresponding open positions relative to the guide spigot (39) of the guide body (37).

10. Non-return valve according to Claim 7 or 8, **characterised in that** a helical pressure spring (45) is envisaged as a closing spring, the same being tensioned between the guide body (37) and the blocking body (35).

11. Non-return valve according to Claim 10, **characterised in that** the guide body (37) comprises radially extending arms (43) at the end facing away from the guide spigot (39), which serve for anchoring the same to the valve housing (1), and which support the facing end of the helical spring (45).

## Revendications

1. Clapet anti-retour comprenant un corps ( 1 ) qui définit un passage ( 7 ) pour du fluide, intérieur et s'étendant le long de son axe ( 5 ) longitudinal, comprenant une pièce se trouvant dans le passage ( 7 ) et définissant un siège ( 31 ) de clapet et un obturateur ( 35 ) qui est mobile axialement dans le passage ( 7 ) à l'encontre de la force de fermeture d'un ressort ( 45 ) de fermeture, afin de se mouvoir entre une position d'obturation s'appliquant à la pièce de siège et une position d'ouverture soulevée du siège ( 31 ) du clapet sur la pièce de siège, **caractérisé en ce que** le corps ( 1 ) forme un guidage le long duquel la pièce de siège peut être réglée en coulissant axialement dans des positions de réglage différentes et sans modification de la longueur de construction du clapet, les positions de réglage correspondant aux mises sous contrainte préalables souhaitées du ressort ( 45 ) de fermeture et ainsi à des réglages souhaités de l'intensité de la force de fermeture du ressort ( 45 ) de fermeture.

2. Clapet anti-retour suivant la revendication 1, **caractérisé en ce qu'**il est prévu, pour commander les positions de réglage axial de la pièce de siège, un dispositif ( 23, 27 ) de coulissement pouvant être actionné du côté extérieur du corps ( 1 ).

3. Clapet anti-retour suivant la revendication 1 ou 2, **caractérisé en ce que** la paroi intérieure du corps ( 1 ) délimitant le passage ( 7 ) forme le guidage de la pièce de corps coulissante, qui est formée par un piston ( 17 ) de réglage ayant une traversée ( 29 ) intérieure coaxiale, dont le bord tourné vers l'obturateur ( 35 ) forme le siège ( 31 ) du clapet pour l'obturateur ( 35 ) ayant un cône ( 33 ) de clapet.

4. Clapet anti-retour suivant les revendications 2 et 3, **caractérisé en ce que** la paroi du corps ( 1 ) formant le guidage du piston ( 17 ) de réglage a au moins une ouverture ( 21 ) en forme de fente s'étendant dans la direction axiale et dans laquelle passe une tige ( 23 ) de commande qui fait partie du dispositif de coulissement, repose par son extrémité intérieure dans un trou radial du piston ( 17 ) de réglage et est en saillie par sa partie extérieure sur le côté extérieur du corps ( 1 ).

5. Clapet anti-retour suivant la revendication 4, **caractérisé en ce que** le corps ( 1 ) a, dans la partie ayant l'ouverture ( 21 ) en forme de fente, un filetage pour au moins un écrou ( 27 ) de réglage appartenant au dispositif de coulissement et coopérant pour le réglage de la position axiale du piston ( 17 ) de réglage avec la partie de la tige ( 23 ) de commande en saillie du corps ( 1 ).

6. Clapet anti-retour suivant la revendication 5, **caractérisé en ce qu'**il est prévu, dans le corps ( 1 ), deux ouvertures ( 21 ) en forme de fentes diamétralement opposées pour deux tiges ( 23 ) de commande diamétralement opposées du dispositif de coulissement.

7. Clapet anti-retour suivant la revendication 6, **caractérisé en ce que** le dispositif de coulissement a deux écrous ( 27 ) de réglage, entre lesquels la partie de la tige ( 23 ) de commande en saillie vers l'extérieur est reçue.

8. Clapet anti-retour suivant l'une des revendications 1 à 7, **caractérisé en ce qu'**il est prévu, dans le passage ( 7 ) du corps ( 1 ), une pièce ( 37 ) de guidage, qui a un passage pour du fluide et sur laquelle l'obturateur ( 35 ) est guidé à coulissement axial.

9. Clapet anti-retour suivant la revendication 8, **caractérisé en ce que** la pièce ( 37 ) de guidage a un tourillon ( 39 ) de guidage s'étendant concentriquement à l'axe ( 5 ) longitudinal et pénétrant pour le guidage de l'obturateur ( 35 ) dans un trou ( 41 ) borgne concentrique de l'obturateur ( 35 ), trou qui est ouvert à son extrémité éloignée du cône ( 33 ) de clapet, et **en ce que** le trou borgne ( 41 ) a une longueur axiale permettant le coulissement de l'obturateur ( 35 ) dans des positions d'ouverture adéquates par rapport au tourillon ( 39 ) de guidage de la pièce ( 37 ) de guidage.

10. Clapet anti-retour suivant la revendication 7 ou 8, **caractérisé en ce qu'**il est prévu un ressort ( 45 ) hélicoïdal ou de compression comme ressort de fermeture, qui est bandé entre la pièce ( 37 ) de guidage et l'obturateur ( 35 ).

11. Clapet anti-retour suivant la revendication 10, **caractérisé en ce que** la pièce ( 37 ) de guidage a, sur l'extrémité opposée au tourillon ( 39 ) de guidage, des bras ( 43 ) qui s'étendent radialement, qui sont prévus pour l'ancrage au corps ( 1 ) et sur lesquels s'appuie l'extrémité tournée vers eux du ressort ( 45 ) hélicoïdal.
